# FASCICULE DE BREVET EUROPEEN

(11) **EP 1 473 556 B1**
(45) Date de publication et mention de la délivrance du brevet: **16.08.2006**
(21) Numéro de dépôt: 04101734.4
(22) Date de dépôt: 26.04.2004
(51) Int. Cl.: G01M 3/38, G01N 21/956

(54) **Procédé et instrument de contrôle de la liaison de l'âme alvéolée d'un nid d'abeilles sur une peau**
Verfahren und Instrument zur Kontrolle der Verbindung von Wänden einer wabenförmigen Struktur mit einem Substrat
Procedure and instrument for controlling the connection of honeycomb cell walls with a substrate

(30) Priorité: 28.04.2003 FR 0305166
(43) Date de publication de la demande: 03.11.2004
(73) Titulaire: SNECMA, 75015 Paris (FR)
(72) Inventeur: LESPINET, Olivier, 91100, CORBEIL ESSONNES (FR); MENINI, Jérôme, 77780, BOURRON MARLOTTE (FR); PANIZZOLI, Franck, 77300, FONTAINEBLEAU (FR)
(74) Mandataire: Poulin, Gérard

(56) Documents cités:
- EP-A- 0 624 788
- WO-A-98/22796
- FR-A- 2 785 388

## Description

### DOMAINE TECHNIQUE

La présente invention se rapporte au domaine technique des structures stratifiées en nid d'abeilles, appelées de façon simplifiée « nids d'abeilles ».

Elle constitue un perfectionnement au procédé et à l'instrument de contrôle de la liaison de l'âme alvéolée d'un nid d'abeilles sur une peau, qui font l'objet du brevet FR 2 785 388.

On rappelle qu'un nid d'abeilles est composé, à un stade de sa fabrication, d'une âme alvéolée liée par l'un de ses côtés à une peau. L'âme alvéolée se présente sous la forme d'alvéoles adjacentes séparées par des cloisons s'étendant dans le sens de l'épaisseur du nid d'abeilles. La liaison entre l'âme alvéolée et la peau peut être réalisée par soudage, par collage, ou encore par brasage. Des défauts de liaison peuvent parfois se produire. Ces défauts peuvent être des défauts isolés, ou prendre la forme de plages entières de défauts. Ils se traduisent par l'apparition d'espaces entre les cloisons des alvéoles et la peau, qui mettent en communication les alvéoles entre elles.

### ETAT DE LA TECHNIQUE ANTERIEURE

On souhaite contrôler la qualité de la liaison entre les cloisons des alvéoles et la peau, et détecter les défauts de cette liaison.

Le procédé et l'instrument de contrôle de la liaison de l'âme alvéolée d'un nid d'abeille sur une peau, divulgués par le brevet FR 2 785 388, vont être brièvement rappelés en référence à la figure 1.

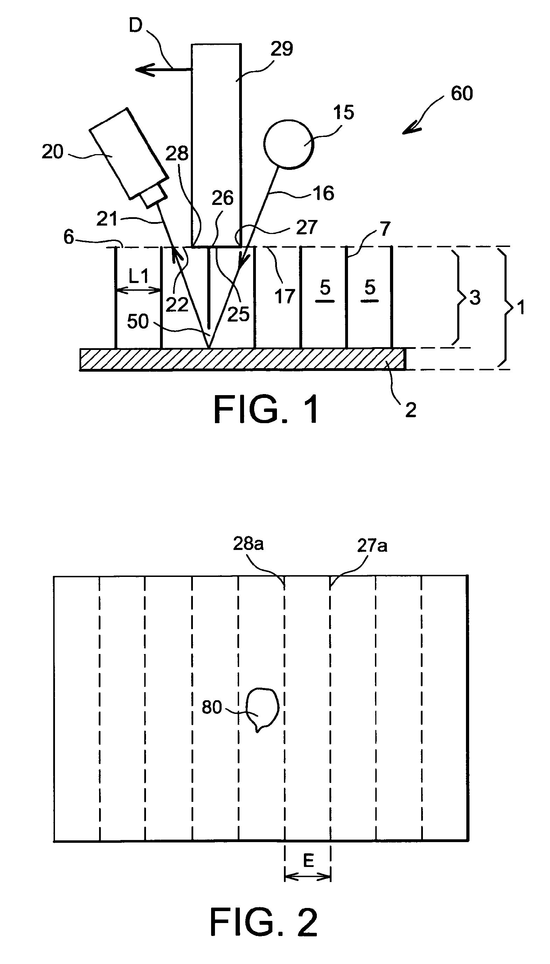

La figure 1 montre un nid d'abeilles 1 comportant une âme alvéolée 3 constituée d'alvéoles 5 adjacentes délimitées latéralement par des cloisons 7, ladite âme 3 étant liée par un côté sur une peau 2, alors que l'autre côté constitue à ce stade de fabrication une surface libre 4 où arrivent les embouchures 6 desdites alvéoles 5.

Le procédé de contrôle de l'art antérieur comporte les opérations suivantes :
- éclairer par une source lumineuse 15 une zone dite éclairée 17 sur la surface libre 4 du nid d'abeilles 1, afin d'illuminer l'intérieur des alvéoles 5 débouchant dans ladite zone éclairée 17,
- détecter la lumière émergente 21 ressortant des alvéoles 5 dans une zone dite observée 22 également à ladite surface libre 4,

L'instrument de contrôle 60 de l'art antérieur est spécialement conçu pour mettre en oeuvre ledit procédé de contrôle. Il comporte :
a) un masque 26 délimité latéralement par un bord d'éclairage 27 et un bord d'observation 28 opposé audit bord d'éclairage 27,
b) une source lumineuse 15 disposée à l'arrière du masque 26, ladite source lumineuse 15 étant solidaire du masque 26 et produisant un faisceau de lumière incidente 16 allant de l'arrière du masque 26 vers l'avant du masque 26,
c) des moyens 20 pour détecter et signaler une éventuelle lumière émergente 21 allant de l'arrière vers l'avant du masque 26, lesdits moyens de détection 20 étant solidaires du masque 26, ladite lumière émergente 21 passant devant le bord d'observation 28.

Le masque 26 est disposé contre la surface libre du nid d'abeilles ou dans un proche voisinage de celle-ci. Il peut être surmonté d'un écran 29 qui se trouve entre la source lumineuse 15 et les moyens de détection 20. Le masque 26 recouvre une zone intermédiaire 25 de la surface libre 4, située entre la zone éclairée 17 et la zone observée 22. Le masque 26 se déplace selon une direction D, et effectue un balayage, incrémental ou continu, de manière à passer au-dessus de toutes les alvéoles 5. La distance minimale entre la zone éclairée 17 et la zone observée 22 est notée E. Elle est au moins égale à la largeur L1 des embouchures 6, ladite largeur L1 étant prise selon la direction D.

Les moyens de détection peuvent être l'oeil d'un opérateur. Ils peuvent, en variante, être des moyens de détection automatisés aptes à saisir un signal provenant d'une lumière émergente 21 issue d'une lumière incidente 16. Ces moyens de détection peuvent être associés à des moyens de visualisation, aptes à restituer une image optique du signal saisi. La figure 2 illustre une telle image optique, obtenue après déplacement en balayage du masque.

Une tache 80 correspondant à un défaut de liaison apparaît sur l'image optique. Elle se trouve située entre une ligne 27a qui est une image du bord d'éclairage 27 du masque 26 et une ligne 28a qui est une image du bord d'observation 28 du masque 26. La distance AB entre les deux lignes 27a et 28a est minimale et égale à la distance E.

Le dispositif précédent présente un inconvénient en ce que, lors de son déplacement, le masque frotte contre l'âme alvéolée au niveau des embouchures des alvéoles du fait d'irrégularités existant à sa surface libre à ce stade de fabrication. Le frottement induit deux conséquences préjudiciables : la première conséquence du frottement est un endommagement de la surface libre et par suite une altération des qualités du nid d'abeilles. La deuxième conséquence du frottement est une perturbation du déplacement du masque et par suite une altération des performances du procédé de contrôle de la liaison de l'âme alvéolée à la peau.

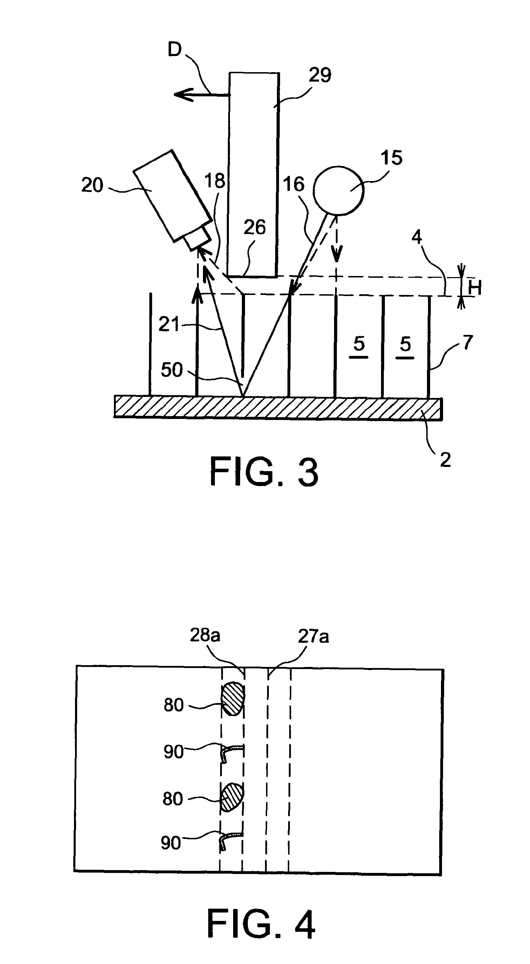

Une solution a été apportée à cet inconvénient, par une variante du procédé de contrôle de l'art antérieur. Cette variante, illustrée à la figure 3, consiste à élever ledit masque 26 d'une certaine hauteur H au-dessus de la surface libre 4. Ainsi, lors de son déplacement, le masque ne frotte plus contre ladite surface libre.

Si les moyens de détection de la lumière émergente sont les yeux d'un opérateur, cette variante du procédé de contrôle est satisfaisante.

Si, au contraire, les moyens de détection de la lumière émergente sont des moyens automatisés, tels que par exemple une caméra CCD associée à des moyens de traitement automatique du signal lumineux émergent, alors cette variante du procédé de contrôle de l'art antérieur présente un nouvel inconvénient. En effet, le masque étant surélevé, les moyens de détection pourront détecter à la fois un signal correspondant à la lumière émergente 21 représentative d'un défaut de liaison 50 de l'âme du nid d'abeilles sur la peau, mais aussi un ou plusieurs signaux additionnels correspondant à un ou plusieurs reflets parasites 18 dus à la réflexion de la lumière incidente 16 sur les sommets des cloisons 7 séparant les alvéoles 5. La figure 4 représente une image optique illustrant cet inconvénient. La tache 80 correspond à un défaut de liaison 80, alors que les taches 90 correspondent des reflets parasites 18. Il en résulte que le contrôle de la liaison de l'âme alvéolée du nid d'abeilles sur la peau perd de sa fiabilité, puisqu'on peut détecter un signal lumineux qui ne correspond pas à un défaut de liaison de l'âme alvéolée du nid d'abeilles sur la peau.

Le document WO-A-98/22796 décrit un procédé et un dispositif pour déterminer la densité des cellules d'un corps en nid d'abeilles. Les cellules de la structure en nid d'abeille sont comptées en comparant une image de la surface avec une image de référence, et en corrigeant les erreurs d'échelle.

Le document EP-A1-0 624 788 décrit un procédé et un appareil pour inspecter une structure en nid d'abeilles ayant des alvéoles traversants, et détecter la présence de défauts de liaison éventuels. Les alvéoles sont traversés par des rayons lumineux dont la direction est inclinée par rapport à la surface de la structure en nid d'abeilles à inspecter, puis les rayons lumineux recueillis après avoir traversé les alvéoles sont analysés par un calcul numérique.

### EXPOSÉ DE L'INVENTION

La présente invention a pour but de pallier les inconvénients ci-dessus mentionnés.

Elle propose un procédé et un instrument de contrôle qui permettent de résoudre à la fois le problème du frottement du masque sur le nid d'abeilles et le problème de l'identification des signaux lumineux saisis par des moyens de détection automatisés.

Selon l'invention, le procédé de contrôle de la liaison de l'âme alvéolée d'un nid d'abeilles sur une peau, ledit nid d'abeilles comportant une âme alvéolée constituée d'alvéoles adjacentes délimitées latéralement par des cloisons, ladite âme étant liée par un côté sur une peau, alors que l'autre côté constitue à ce stade de fabrication une surface libre où arrivent les embouchures desdites alvéoles, comporte les opérations suivantes :
- éclairer par une source lumineuse une zone dite éclairée sur la surface libre du nid d'abeilles, afin d'illuminer l'intérieur des alvéoles débouchant dans ladite zone éclairée,
- détecter de manière automatique la lumière émergente ressortant des alvéoles dans une zone dite observée également à ladite surface libre,
   la distance minimale entre ladite zone éclairée et ladite zone observée étant notée E et définissant une direction D, et la distance E étant au moins égale à la largeur L1 des embouchures, ladite largeur L1 étant prise selon la direction D,
- détecter de manière automatique les embouchures dans une zone dite photographiée également à ladite surface libre.

Le procédé de contrôle comporte, en outre, des opérations de traitement du signal consistant à :
- transformer un signal correspondant à la lumière émergente détectée en une première image optique se présentant sous forme d'une matrice de pixels sur laquelle apparaissent des taches représentatives d'éventuels défauts de liaison et des taches représentatives de reflets parasites,
- transformer un signal correspondant aux embouchures détectées en une seconde image optique se présentant sous forme d'une matrice de pixels sur laquelle apparaissent des contours.

De préférence, le procédé de contrôle comporte, en outre, une opération de traitement d'images comportant les étapes suivantes :
- superposer ladite première image optique et ladite seconde image optique, et identifier sur la première image optique les taches qui se trouvent au moins en partie superposées avec des contours de la deuxième image optique comme étant des taches représentatives de reflets parasites,
- fournir une troisième image optique issue de la première image optique, sur laquelle les taches identifiées comme étant représentatives de reflets parasites ont été supprimées.

De préférence, la distance minimale entre ladite zone observée et ladite zone photographiée, prise selon la direction D étant notée F, et la distance F est inférieure à la largeur L2 des embouchures de deux alvéoles adjacentes.

Le procédé de contrôle comporte, en option, une autre opération de traitement d'image consistant à délivrer une image optique résultante qui visualise les défauts de liaison de façon codifiée. De préférence, ladite image optique résultante consiste en une représentation en vue de dessus du nid d'abeilles, sur laquelle une première couleur est attribuée aux alvéoles qui ne sont pas affectées d'un défaut de liaison, et une deuxième couleur est attribuée aux alvéoles qui sont affectées d'un défaut de liaison.

Selon l'invention, l'instrument de contrôle de la liaison de l'âme alvéolée d'un nid d'abeilles sur une peau, ledit instrument étant spécialement conçu pour mettre en oeuvre le procédé de contrôle selon l'invention, comporte :
a) un premier masque délimité latéralement par un bord d'éclairage et un bord d'observation opposé audit bord d'éclairage,
b) une source lumineuse disposée à l'arrière du premier masque, ladite source lumineuse étant solidaire du premier masque, ladite source lumineuse produisant un faisceau de lumière incidente allant de l'arrière du premier masque vers l'avant du premier masque,
c) des premiers moyens pour détecter de manière automatique une éventuelle lumière émergente allant de l'arrière vers l'avant du premier masque, lesdits premiers moyens de détection étant solidaires du premier masque, ladite lumière émergente passant devant le bord d'observation.

L'instrument de contrôle comporte, en outre :
d) un second masque, solidaire du premier masque et disposé en avant de celui-ci, à une distance M donnée,
e) des seconds moyens pour détecter de manière automatique les embouchures des alvéoles en avant du second masque, lesdits seconds moyens de détection étant solidaires du second masque,
f) des moyens de retenue pour maintenir ledit premier masque et ledit second masque à une hauteur H au-dessus de la surface libre.

De préférence, l'instrument de contrôle comporte, en outre, des moyens de traitement du signal et des moyens de traitement d'image associés aux premiers et aux seconds moyens de détection, pour la mise en oeuvre, respectivement, des opérations de traitement du signal et des opérations de traitement d'image du procédé de contrôle.

### BRÈVE DESCRIPTION DES DESSINS

L'invention sera mieux comprise à la lecture de la description détaillée qui va suivre de modes de réalisation particuliers de l'invention, fournis à titre illustratif et nullement limitatif, en référence aux dessins annexés, dans lesquels :
- la figure 1, déjà décrite, illustre un nid d'abeilles vu en coupe ainsi qu'un procédé général et un instrument de contrôle de la liaison, selon l'art antérieur ;
- la figure 2, déjà décrite, illustre en vue de dessus une image optique d'un défaut de nid d'abeille, obtenue en utilisant le procédé et l'instrument de l'art antérieur ;
- la figure 3, déjà décrite, est une vue analogue à la figure 1 illustrant une variante de réalisation du procédé de l'art antérieur ;
- la figure 4, déjà décrite, est une vue analogue à la figure 2 illustrant en vue de dessus une image optique d'un défaut de nid d'abeille, obtenue en utilisant la variante de procédé et l'instrument de l'art antérieur ;
- la figure 5 est une vue analogue à la figure 3 pour un procédé et un instrument de contrôle selon l'invention ;
- la figure 6A illustre en vue de dessus une image optique montrant des taches représentatives d'un défaut de liaison et de reflets parasites ;
- la figure 6B illustre en vue de dessus une image optique montrant des contours représentatifs de l'embouchure d'une alvéole ;
- la figure 6C illustre en vue de dessus une image optique montrant une tache représentative d'un défaut de liaison obtenue après une opération de traitement des images optiques des figures 6A et 6B ;
- la figure 7 illustre en vue de dessus une représentation visuelle d'un nid d'abeilles mettant en évidence les zones affectées de défauts de liaison obtenue après une opération supplémentaire de traitement d'image ; et
- la figure 8 illustre en vue de dessus une image optique d'un défaut de nid d'abeilles, obtenue avec une variante de réalisation de l'instrument de contrôle selon l'invention.

### EXPOSÉ DÉTAILLÉ DE MODES DE RÉALISATION PARTICULIERS

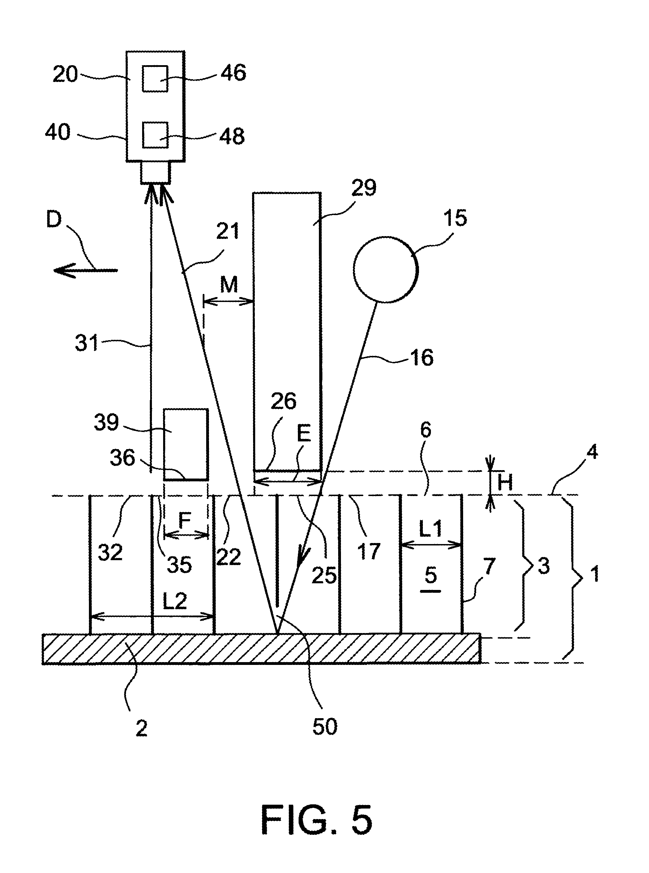

Sur la figure 5, est visualisé le principe général d'un procédé de contrôle selon l'invention ainsi qu'un instrument de contrôle 160 conforme à l'invention. Des éléments identiques à des éléments de l'instrument de contrôle de l'art antérieur portent des références numériques identiques.

Sur la figure 5, on a représenté, en coupe, un nid d'abeilles 1 comportant une âme alvéolée 3 formée d'alvéoles 5 adjacentes et séparées par des cloisons 7. Ladite âme alvéolée 3 est liée d'un côté sur une peau 2 et son autre côté constitue une surface libre 4 où arrivent les embouchures 6 des alvéoles 5. Un défaut de liaison 50 est situé entre deux alvéoles.

Un instrument de contrôle 160 se déplace selon une direction D, en balayage incrémental ou continu, au-dessus de la surface libre 4 de l'âme alvéolée 3.

D'une manière analogue à l'instrument de contrôle de l'art antérieur, l'instrument de contrôle de la figure 5 comporte :
- un premier masque 26 ayant un bord d'éclairage 27 et un bord d'observation 28, qui peut être surmonté d'un écran 29, ledit premier masque 26 recouvrant une première zone intermédiaire 25 située entre une zone éclairée 17 et une zone observée 22,
- une source lumineuse 15, solidaire du premier masque 26, qui émet une lumière incidente 16 éclairant le fond des alvéoles 5,
- des premiers moyens de détection 20 aptes à détecter, de manière automatique, une lumière émergente 21 provenant du fond des alvéoles 5, ladite lumière émergente 21 étant issue de la lumière incidente 16 qui a traversé le défaut de liaison 50.

L'instrument de contrôle 160 comporte en outre :
- un second masque 36, qui peut être surmonté d'un écran 39, ledit second masque 36 étant solidaire du premier masque 26 et situé en avant de celui-ci à une distance M choisie de telle manière que la lumière émergente passe entre le premier masque 26 et le second masque 36 lors du déplacement vers l'avant desdits deux masques 26, 36,
- des moyens de retenue (non représentés) qui permettent de maintenir le premier masque 26 et le second masque 36 à une hauteur H donnée au-dessus de la surface libre 4, ladite hauteur H étant de préférence au moins égale à 2 centimètres,
- des seconds moyens de détection 40, aptes à détecter, de manière automatique, les embouchures 6 des alvéoles 5 dans une zone dite photographiée 32, ladite zone photographiée 32 étant située en avant de la zone observée 22, et séparée de celle-ci par une seconde zone intermédiaire 35.

La distance minimale entre ladite zone observée 22 et ladite zone photographiée 32, prise selon la direction D, est notée F et est supérieure à la largeur L1 des embouchures 6.

Le second masque 36 a pour fonction de faire obstacle à la lumière qui pourrait venir sur la zone observée 22. La distance M entre le premier masque 26 et le second masque 36 est de préférence supérieure à la largeur L1 d'une alvéole 5, afin que la lumière éclairant la zone photographiée 32 n'arrive pas dans une alvéole 5 qui est en cours d'observation.

Sur l'exemple illustré à la figure 5, la détection des embouchures 6 par les seconds moyens de détections 40 (flèche 31) se fait à lumière ambiante. En variante, elle pourrait se faire en éclairant lesdites alvéoles 5 au moyen d'une source lumineuse additionnelle, disposée à l'avant du second masque 36 et solidaire de celui-ci.

Sur l'exemple illustré à la figure 5, les premiers moyens de détection automatisés 20 et les seconds moyens de détection automatisés 40 sont confondus. Ils peuvent être par exemple une caméra, pour un balayage continu de l'instrument de contrôle 160 au-dessus de la surface libre 4, ou un appareil photographique pour un balayage incrémental dudit instrument de contrôle 160.

De préférence, des moyens de traitement du signal 46 et des moyens de traitement d'image 48 sont associés aux moyens de détection 20, 40. On utilisera par exemple une caméra de type CCD.

Les moyens de traitement du signal 46 permettent de transformer les signaux détectés par les moyens de détection 20, 40 en images optiques 60a, 60b se présentant sous la forme de matrices de pixels.

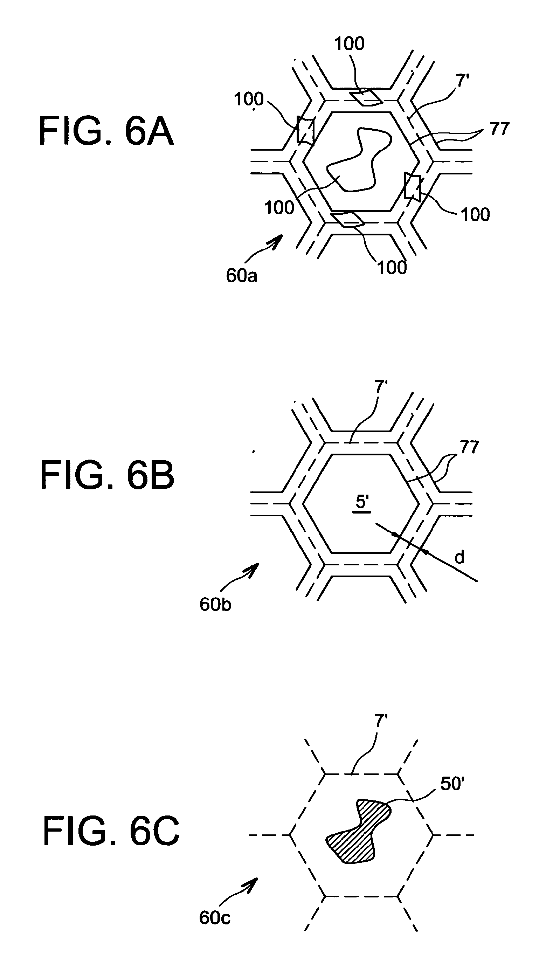

La figure 6A montre une telle image optique 60a obtenue par traitement d'un signal provenant de la lumière émergente 21. Des taches 100 apparaissent sur cette image optique 60a. Elles peuvent correspondre à une lumière émergente 21 représentative d'un éventuel défaut de liaison 50 (voir figure 5). Elles peuvent aussi correspondre à des reflets parasites 18 provenant de la réflexion de la lumière incidente 16 sur les sommets des cloisons 7, de manière analogue à ce qui a été décrit en référence à la figure 3 pour la variante du procédé de l'art antérieur.

La figure 6B montre une autre image optique 60b obtenue par traitement d'un signal provenant des embouchures 6 des alvéoles 5. Sur cette image 60b, de type image photographique, apparaissent des contours 77. Ils correspondent aux embouchures 6 des alvéoles 5, et délimitent des aires 5' représentatives des alvéoles 5. La distance d entre deux sections sensiblement parallèles de contours 77 correspond à l'épaisseur des cloisons 7 séparant les alvéoles 5. En traits interrompus sont matérialisées des lignes 7' qui sont une représentation théorique des contours des alvéoles 5.

Les moyens de traitement d'image 48 mettent en oeuvre les étapes de traitement d'image du procédé de contrôle. Au cours de ces étapes, qui sont effecuées par l'intermédiaire de moyens de calcul non représentés, on superpose l'image optique 60a contenant des taches 100 et l'image optique 60b contenant des contours 77, comme représenté schématiquement à la figure 6A. Puis on compare la position des taches 100 et la position des contours 77. Les taches 100 qui se trouvent au moins partiellement superposées avec une zone comprise entre deux sections sensiblement parallèles de contours 77 sont identifiées comme étant des taches correspondant à des reflets parasites 18. Puis on crée une troisième image optique 60c, sur laquelle les taches correspondant à des reflets parasites 18 ont été supprimées, et sur laquelle n'apparaissent plus que des taches 50' qui n'ont aucune surface de superposition avec les zones comprises entre deux sections sensiblement parallèles de contours 77, qui sont des représentations des cloisons 7. Ces taches 50' sont alors identifiées comme étant représentatives des défauts de liaison 50. Pour une visualisation plus aisée, les lignes théoriques 7' sont également représentés en traits interrompus sur la troisième image optique 60c.

Une telle image 60c permet de visualiser aisément quelles alvéoles sont affectées d'un défaut de liaison.

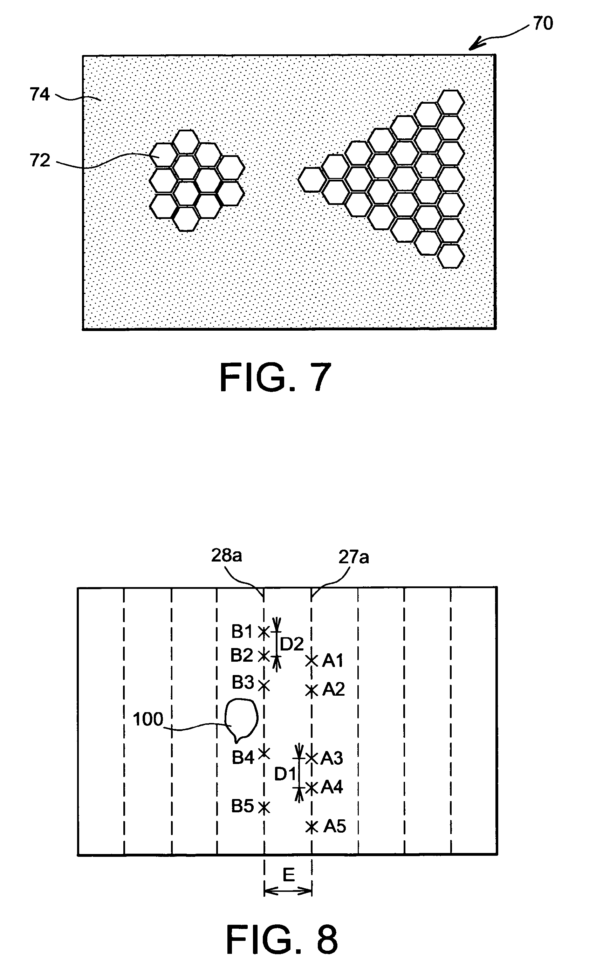

Une opération supplémentaire de traitement d'image permet de fournir une image optique résultante sur laquelle est visualisée de façon codifiée la présence de défauts de liaison 50. La figure 7 illustre un exemple d'une telle image optique résultante 70. Les alvéoles affectées d'un défaut de liaison sont représentée d'une première couleur, par exemple en blanc, et les alvéoles qui ne sont pas affectées d'un défaut de liaison sont représentées d'une autre couleur, par exemple en gris ou en noir.

Une variante de réalisation optionnelle de l'instrument de contrôle est illustrée sur la figure 8. Selon cette variante, l'instrument de contrôle 160 est tel qu'en N points géométriques A successifs sur le bord d'éclairage et en N points géométriques B successifs sur le bord d'observation, N étant au moins égal à cinq, la distance AB entre le bord d'éclairage et le bord d'observation est minimale et égale à E, la distance D1 entre deux points géométriques A étant au moins égale à 0,5 x E, la distance D2 entre deux points géométriques B étant aussi au moins égale à 0,5 x E, les N points géométriques A formant une ligne ouverte dont les deux points géométriques A formés à ses extrémités sont à une distance l'un de l'autre supérieure à celle de n'importe quel autre doublet de points géométriques A, les N points géométriques B formant également une ligne ouverte dont les deux points géométriques B à ses extrémités sont à une distance l'un de l'autre supérieure à celle de n'importe quel autre doublet de points géométriques B.

L'invention n'est pas limitée aux modes de réalisation qui viennent d'être décrits.

On pourrait, sans sortir du cadre de l'invention, envisager que les premiers moyens de détection et les seconds moyens de détection soient disjoints et reliés.

Les alvéoles représentées aux figures sont des alvéoles de forme hexagonale. Mais bien entendu, l'invention le procédé et l'instrument de contrôle de l'invention sont adaptés à la mise en évidence de défauts de liaison d'une âme alvéolée sur une peau, pour des alvéoles ayant une forme non hexagonale, par exemple une forme quadrangulaire ou une forme arrondie.

Dans la configuration de contrôle qui vient d'être décrite, la source lumineuse 15 est à l'arrière du premier masque 26, les premiers et seconds moyens de détection 20, 40 sont à l'avant du premier masque 26, et le second masque 36 est à l'avant du premier masque 26. On pourrait envisager une configuration inversée dans laquelle la source lumineuse 15 serait à l'avant du premier masque 26, les premiers et seconds moyens de détection 20, 40 seraient à l'arrière du premier masque 26, et le second masque 36 serait à l'arrière du premier masque 26.

Il est à noter que les positions relatives par rapport au premier masque de la source lumineuse des premiers et seconds moyens de détection, et du second masque de détection ne sont pas liés au sens de déplacement de l'instrument de contrôle. En d'autres termes, l'instrument peut être déplacé selon la direction D dans le sens défini comme allant de la source lumineuse à la caméra, comme indiqué aux figures annexées, mais il pourrait tout aussi bien être déplacé dans le sens inverse.

## Revendications

1. Procédé de contrôle de la liaison de l'âme alvéolée d'un nid d'abeilles sur une peau, ledit nid d'abeilles (1) comportant une âme alvéolée (3) constituée d'alvéoles (5) adjacentes délimitées latéralement par des cloisons (7), ladite âme (3) étant liée par un côté sur une peau (2), alors que l'autre côté constitue à ce stade de fabrication une surface libre (4) où arrivent les embouchures (6) desdites alvéoles (5), ledit procédé comportant les opérations suivantes :
- éclairer par une source lumineuse (15) une zone dite éclairée (17) sur la surface libre (4) du nid d'abeilles (1), afin d'illuminer l'intérieur des alvéoles (5) débouchant dans ladite zone éclairée (17),
- détecter de manière automatique la lumière émergente (21) ressortant des alvéoles (5) dans une zone dite observée (22) également à ladite surface libre (4),
la distance minimale entre ladite zone éclairée (17) et ladite zone observée (22) étant notée (E) et définissant une direction (D), et la distance (E) étant au moins égale à la largeur (L1) des embouchures (6), ladite largeur (L1) étant prise selon la direction (D),
- détecter de manière automatique les embouchures (6) dans une zone dite photographiée (32) également à ladite surface libre (4)
**caractérisé en ce qu'**il comporte, en outre, des opérations de traitement du signal consistant à :
- transformer un signal correspondant à la lumière émergente (21) détectée en une première image optique (60a) se présentant sous forme d'une matrice de pixels sur laquelle apparaissent des taches (100) représentatives d'éventuels défauts de liaison (50) et des taches (100) représentatives de reflets parasites (18),
- transformer un signal correspondant aux embouchures (6) détectées en une seconde image optique (60b) se présentant sous forme d'une matrice de pixels sur laquelle apparaissent des contours (77) correspondant aux embouchures (6) des avéoles (5).

2. Procédé de contrôle selon la revendication 1, **caractérisé en ce qu'**il comporte, en outre, une opération de traitement d'images comportant les étapes suivantes :
- superposer ladite première image optique (60a) et ladite seconde image optique (60b), et identifier sur la première image optique (60a) les taches (100) qui se trouvent au moins en partie superposées avec des contours (77) de la deuxième image optique (60b) comme étant des taches (100) représentatives de reflets parasites (18),
- fournir une troisième image optique (60c) issue de la première image optique (60a), sur laquelle les taches (100) identifiées comme étant représentatives de reflets parasites (18) ont été supprimées.

3. Procédé de contrôle selon la revendication 1 ou 2, **caractérisé en ce que** la distance minimale entre ladite zone observée (17) et ladite zone photographiée (32), prise selon la direction (D) et notée (F), est supérieure à la largeur (L2) des embouchures (6) de deux alvéoles adjacentes (5).

4. Procédé de contrôle selon l'une quelconque des revendications 1 à 3, **caractérisé en ce que** la détection automatique des embouchures (6) des alvéoles (5) dans la zone photographiée (32) se fait à lumière ambiante.

5. Procédé de contrôle selon l'une quelconque des revendications 1 à 3, **caractérisé en ce que** la détection automatique des embouchures (6) des alvéoles (5) dans la zone photographiée (32) se fait en éclairant lesdites alvéoles (5) au moyen d'une source lumineuse additionnelle.

6. Procédé selon l'une quelconque des revendications 1 à 5, **caractérisé en ce qu'**il comporte, en outre, une autre opération consistant à délivrer une image optique résultante (70) qui visualise les défauts de liaison (50) de façon codifiée.

7. Procédé selon la revendication 6, **caractérisé en ce que** la visualisation codifiée des défauts de liaison (50) consiste en une représentation en vue de dessus du nid d'abeilles (1), sur laquelle une première couleur (74) est attribuée aux alvéoles (5) qui ne sont pas affectées d'un défaut de liaison (50), et une autre couleur (72) est attribuée aux alvéoles (5) qui sont affectées d'un défaut de liaison (50).

8. Instrument de contrôle (160) de la liaison de l'âme alvéolée d'un nid d'abeilles sur une peau, ledit instrument étant spécialement conçu pour mettre en oeuvre le procédé de contrôle selon l'une queconque des revendications 1 à 7, ledit instrument (160) comportant :
a) un premier masque (26) délimité latéralement par un bord d'éclairage (27) et un bord d'observation (28) opposé audit bord d'éclairage (27),
b) une source lumineuse (15) disposée à l'arrière du premier masque (26), ladite source lumineuse (15) étant solidaire du premier masque (26), ladite source lumineuse (15) produisant un faisceau de lumière incidente (16) allant de l'arrière du premier masque (26) vers l'avant du premier masque (26),
c) des premiers moyens (20) pour détecter de manière automatique une éventuelle lumière émergente (21) allant de l'arrière vers l'avant du premier masque (26), lesdits premiers moyens de détection (20) étant solidaires du premier masque (26), ladite lumière émergente (21) passant devant le bord d'observation (28),
**caractérisé en ce qu'**il comporte, en outre,
d) un second masque (36), solidaire du premier masque (28) et disposé en avant de celui-ci, à une distance (M) donnée,
e) des seconds moyens (40) pour détecter de manière automatique les embouchures (6) des alvéoles (5) en avant du second masque (36), lesdits seconds moyens de détection (40) étant solidaires du second masque (36),
f) des moyens de retenue pour maintenir ledit premier masque (26) et ledit second masque (36) à une hauteur (H) au-dessus de la surface libre (4).

9. Instrument de contrôle (160) selon la revendication 8, **caractérisé en ce que** la distance (M) entre le premier masque (26) et le second masque (36) est choisie de telle façon que la lumière émergente (21) passe entre le premier masque (26) et le second masque (36).

10. Instrument de contrôle (160) selon la revendication 8 ou 9, **caractérisé en ce que** les seconds moyens de détection (40) sont confondus avec les premiers moyens de détection (20).

11. Instrument de contrôle (160) selon l'une quelconque des revendications 8 à 10, **caractérisé en ce qu'**il comporte, en outre, une source de lumière additionnelle, destinée à éclairer les alvéoles (5) en vue de la détection automatique de leurs embouchures (6) par les seconds moyens de détection (40), ladite source de lumière additionnelle étant disposée à l'avant du second masque (36) et solidaire de celui-ci.

12. Instrument de contrôle (160) selon l'une quelconque des revendications 8 à 11, **caractérisé en ce qu'**il comporte, en outre, des moyens de traitement du signal (46) et des moyens de traitement d'image (48) associés aux premiers et aux seconds moyens de détection (20, 40).

13. Instrument de contrôle (160) selon la revendication 12, **caractérisé en ce que** lesdits moyens de traitement du signal (46) sont aptes à :
- transformer un signal correspondant à la lumière émergente (21) détectée en une première image optique (60a) se présentant sous forme d'une matrice de pixels sur laquelle apparaissent des taches (100) représentatives d'éventuels défauts de liaison (50) et des taches (100) représentatives de reflets parasites (18),
- transformer un signal correspondant aux embouchures (6) détectées en une seconde image optique (60b) se présentant sous forme d'une matrice de pixels sur laquelle apparaissent des contours (77).

14. Instrument de contrôle (160) selon la revendication 12 ou 13, **caractérisé en ce que** lesdits moyens de traitement d'image (48) sont aptes à :
- superposer une première image optique (60a) se présentant sous forme d'une matrice de pixels sur laquelle apparaissent des taches (100) et une seconde image optique (60b) se présentant sous forme d'une matrice de pixels sur laquelle apparaissent des contours (77),
- identifier sur la première image optique (60a) les taches (100) qui se trouvent au moins partiellement superposées avec des contours (77) comme étant des taches (100) représentatives de reflets parasites (18), et
- fournir une troisième image optique (60c) issue de la première image optique (60a), sur laquelle les taches (100) identifiées comme étant représentatives de reflets parasites (18) ont été supprimées.

15. Instrument de contrôle (160) selon l'une quelconque des revendications 12 à 14, **caractérisé en ce que** lesdits moyens de traitement d'image (48) sont également aptes à délivrer une image optique résultante (70) qui visualise les défauts de liaison (50) de façon codifiée.

16. Instrument de contrôle (160) selon la revendication 15, **caractérisé en ce que** la visualisation codifiée des défauts de liaison (50) consiste en une représentation en vue de dessus du nid d'abeilles (1), sur laquelle une première couleur (74) est attribuée aux alvéoles (5) qui ne sont pas affectées d'un défaut de liaison (50), et une autre couleur (72) est attribuée aux alvéoles (5) qui sont affectées d'un défaut de liaison (50).

17. Instrument de contrôle (160) selon l'une quelconque des revendications 8 à 16, **caractérisé en ce qu'**il est tel qu'en N points géométriques A successifs sur le bord d'éclairage (27) et en N points géométriques B successifs sur le bord d'observation (28), N étant au moins égal à cinq, la distance AB entre le bord d'éclairage (27) et le bord d'observation (28) est minimale et égale à E, la distance D1 entre deux points géométriques A étant au moins égale à 0,5 x E, la distance D2 entre deux points géométriques B étant aussi au moins égale à 0,5 x E, les N points géométriques A formant une ligne (27a) ouverte dont les deux points géométriques A formés à ses extrémités sont à une distance l'un de l'autre supérieure à celle de n'importe quel autre doublet de points géométriques A, les N points géométriques B formant également une ligne (28a) ouverte dont les deux points géométriques B à ses extrémités sont à une distance l'un de l'autre supérieure à celle de n'importe quel autre doublet de points géométriques B.

## Claims

1. Method of inspection of the bond between a honeycomb core and a skin, said honeycomb (1) comprising a honeycomb core (3) composed of adjacent cells (5) delimited laterally by partitions (7), said core (3) being bonded on one side on a skin (2), while at this stage of manufacturing the other side forms a free surface (4) containing the openings (6) of said cells (5), said method comprising the following operations:
- use of a light source (15) to illuminate a so-called illuminated area (17) on the free surface (4) of the honeycomb (1) in order to illuminate the inside of cells (5) opening up in said illuminated area (17),
- automatically detect emerging light (21) from the cells (5) in a so-called observed area (22) also at said free surface (4), the minimum distance between said illuminated area (17) and said observed area (22) being denoted (E) and defining a direction (D) and the distance (E) being equal to at least the width (L1) of the openings (6), said width (L1) being measured along the direction (D),
- automatically detecting openings (6) in a so-called photographed area (32), also on said free surface (4),
**characterized in that** it also comprises signal processing operations consisting of:
- transforming a signal corresponding to detected emerging light (21) into a first optical image (60a) in the form of a matrix of pixels on which spots (100) appear representing any bond defects (50) and spots (100) representing parasite reflections (18),
- transforming a signal corresponding to the detected openings (6) into a second optical image (60b) in the form of a matrix of pixels on which contours (77) appear, corresponding to the openings (6) of cells (5).

2. Inspection method according to claim 1, **characterized in that** it also comprises an image processing operation comprising the following steps:
- superpose said first optical image (60a) and said second optical image (60b), and identify the spots (100) on the first optical image (60a) that are at least partly superposed with the contours (77) of the second optical image (60b) as being spots (100) representing parasite reflections (18),
- provide a third optical image (60c) derived from the first optical image (60a) from which spots (100) identified as being spots representing parasite reflections (18) have been removed.

3. Inspection method according to claim 1 or 2, **characterized in that** the minimum distance between said observed area (17) and said photographed area (32) taken along the direction (D) and denoted (F), is greater than the width (L2) of the openings (6) of two adjacent cells (5).

4. Inspection method according to any one of the claims 1 to 3,
**characterized in that** openings (6) of the cells (5) in the photographed area (32) are detected automatically with ambient light.

5. Inspection method according to any one of the claims 1 to 3,
**characterized in that** openings (6) of the cells (5) in the photographed area (32) are detected automatically by illuminating said cells (5) using an additional light source.

6. Method according to any one of claims 1 to 5, **characterized in that** it also comprises another optional image processing operation consisting of outputting a resulting optical image (70) that displays bond defects (50) in a coded manner.

7. Method according to claim 1, **characterized in that** the coded display of bond defects (50) consists of a representation of a top view of the honeycomb (1), on which a first colour (74) is assigned to the cells (5) that are not affected by a bond defect (50), and a second colour (72) is assigned to cells (5) that are affected by a bond defect (50).

8. Instrument (160) for inspection of the bond between a honeycomb core and a skin, said instrument specially designed to implement the inspection method according to any one of claims 1 to 7, said instrument (16) comprising:
a) a first mask (26) delimited laterally by an illumination edge (27) and an observation edge (28) opposite said illumination edge (27),
b) a light source (15) placed behind the first mask (26), said light source (15) being fixed to the first mask (26), said light source (15) producing a beam of incident light (16) in the direction from the back of the first mask (26) towards the front of the first mask (26),
c) first means (20) of automatically detecting emerging light (21) in the direction from the back towards the front of the first mask (26), said first detection means (20) being fixed to the first mask (26), said emerging light (21) passing in front of the observation edge (28),
**characterized in that** it also comprises:
d) a second mask (36) fixed to the first mask (28) and arranged in front of it at a given distance (M),
e) second means (40) of automatically detecting openings (6) of the cells (5) in front of the second mask (36), said second detection means (40) being fixed to the second mask (36),
f) retaining means to hold said first mask (26) and said second mask (36) at a height (H) above the free surface (4).

9. Inspection instrument (160) according to claim 8, **characterized in that** the distance (M) between the first mask (26) and the second mask (36) is chosen such that emerging light (21) passes between the first mask (26) and the second mask (36).

10. Inspection instrument (160) according to either claim 8 or 9,
**characterized in that** the second detection means (40) and the first detection means (20) are coincident.

11. Inspection instrument (160) according to any one of claims 8 to 10,
**characterized in that** it also comprises an additional light source, designed to illuminate the cells (5) for automatic detection of their openings (6) by the second detection means (40), said additional light source being placed in front of the second mask (36) and fixed to it.

12. Inspection instrument (160) according to any one of claims 8 to 11,
**characterized in that** it also comprises signal processing means (46) and image processing means (48) associated with the first and second detection means (20, 40).

13. Inspection instrument (160) according to claim 12, **characterized in that** said signal processing means (46) are capable of:
- transforming a signal corresponding to detected emerging light (21) into a first optical image (60a) in the form of a matrix of pixels on which spots (100) appear representing any bond defects (50) and spots (100) representing parasite reflections (18),
- transforming a signal corresponding to the detected openings (6) into a second optical image (60b) in the form of a matrix of pixels on which contours (77) appear.

14. Inspection instrument (160) according to either claim 12 or 13,
**characterized in that** said image processing means (48) are capable of:
- superposing a first optical image (60a) in the form of a matrix of pixels on which spots (100) appear and a second optical image (60b) in the form of a matrix of pixels on which contours (77) appear,
- identifying the spots (100) on the first optical image (60a) that are at least partly superposed with the contours (77) as being spots (100) representing parasite reflections (18), and
- providing a third optical image (60c) derived from the first optical image (60a) from which spots (100) identified as being spots representing parasite reflections (18) have been removed.

15. Inspection instrument (160) according to any one of claims 12 to 14,
**characterized in that** said image processing means (48) are also capable of outputting a resulting optical image (70) that displays bond defects (50) in a coded manner.

16. Inspection instrument (160) according to claim 15, **characterized in that** the coded display of bond defects (50) consists of a representation of a top view of the honeycomb (1), on which a first colour (74) is assigned to the cells (5) that are not affected by a bond defect (50), and another colour (72) is assigned to cells (5) that are affected by a bond defect (50).

17. Inspection instrument (160) according to any one of claims 8 to 16,
**characterized in that** it is such that, for N successive geometric points A on the illumination edge (27) and N successive geometric points B on the observation edge (28), where N is equal to at least five, the distance AB between the illumination edge (27) and the observation edge (28) is minimal and is equal to E, the distance D1 between two geometric points A being equal to at least 0.5 x E, the distance D2 between two geometric points B also being equal to at least 0.5 x E, the N geometric points A forming an open line (27a) for which the distance between the two geometric points A formed at its ends is greater than the distance between any other pair of geometric points A, the N geometric points B also forming an open line (28b) for which the distance between the two geometric points B at its ends is greater than the distance for any other pair of geometric points B.

## Patentansprüche

1. Verfahren zum Kontrollieren der Verbindung des zellenförmigen Kerns eines Wabenmusters auf einer Haut, wobei das Wabenmuster (1) einen zellenförmigen Kern (3) aufweist, der durch angrenzende Zellen (5) gebildet ist, welche seitlich durch Trennwände (7) abgegrenzt sind, wobei der Kern mit einer Seite mit einer Haut (2) verbunden ist, während die andere Seite in diesem Fertigungsstadium eine freie Fläche (4) bildet, wo die Öffnungen (6) der Zellen (5) ankommen, wobei das Verfahren die folgenden Operationen umfasst:
- Beleuchten einer so genannten beleuchteten Zone (17) an der freien Fläche (4) des Wabenmusters (1) durch eine Lichtquelle (15), um das Innere der Zellen (5) auszuleuchten, die in die beleuchtete Zone (17) münden,
- automatisches Erfassen des austretenden Lichts (21), das von den Zellen (5) stammt, in einer so genannten beobachteten Zone (22) ebenfalls an der so genannten freien Fläche (4),
wobei der minimale Abstand zwischen der beleuchteten Zone (17) und der so genannten beobachteten Zone (22) mit (E) bezeichnet ist und eine Richtung (D) definiert, und wobei der Abstand (E) wenigstens gleich der Breite (L1 der Öffnungen (6) ist, wobei die Breite (L1) nach der Richtung (D) genommen ist,
- automatisches Erfassen der Öffnungen (6) in einer so genannten fotografierten Fläche (32) ebenfalls an der freien Fläche (4),
**dadurch gekennzeichnet**, das es ferner Operationen zur Verarbeitung des Signals aufweist, die darin bestehen:
- ein Signal, das dem erfassten austretenden Licht (21) entspricht, in ein erstes optisches Bild (60a) umzusetzen, das sich in Form einer Pixelmatrix darstellt, auf welcher Flecken (100), die für mögliche Verbindungsfehler (50) stehen, und Flecken (100) erscheinen, die für parasitäre Reflexe (18) stehen,
- ein Signal, das den erfassten Öffnungen (6) entspricht, in ein zweites optisches Bild (60b) umzusetzen, das sich in Form einer Pixelmatrix darstellt, auf welcher Umrisse (77) erscheinen, die den Öffnungen (6) der Zellen (5) entsprechen.

2. Kontrollverfahren nach Anspruch 1, **dadurch gekennzeichnet, dass** es ferner eine Bildverarbeitungsoperation mit den folgenden Schritten aufweist:
- das erste optische Bild (60a) und das zweite optische Bild (60b) werden überlagert, und auf dem ersten optischen Bild (60a) werden die Flecken (100), die wenigstens teilweise von Umrissen (77) des zweiten optischen Bildes (60b) überlagert sind, als Flecken (100) identifiziert, die für parasitäre Reflexe (18) stehen,
- es wird ein drittes optisches Bild (60c) geliefert, das aus dem ersten optischen Bild (60a) stammt und auf dem die Flecken (100) unterdrückt sind, die als repräsentativ für parasitäre Reflexe (18) identifiziert wurden.

3. Kontrollverfahren nach Anspruch 1 oder 2, **dadurch gekennzeichnet, dass** der minimale Abstand zwischen der beobachteten Zone (17) und der fotografierten Zone (32), genommen nach der Richtung (D) und mit (F) bezeichnet, größer als die Breite (L2) der Öffnungen (6) von zwei angrenzenden Zellen (5) ist.

4. Kontrollverfahren nach einem der Ansprüche 1 bis 3, **dadurch gekennzeichnet, dass** die automatische Erfassung der Öffnungen (6) der Zellen (5) in der fotografierten Zone (32) bei Umgebungslicht durchgeführt wird.

5. Kontrollverfahren nach einem der Ansprüche 1 bis 3, **dadurch gekennzeichnet, dass** die automatische Erfassung der Öffnungen (6) der Zellen (5) in der fotografierten Zone (32) durchgeführt wird, indem die Zellen (5) mittels einer zusätzlichen Lichtquelle beleuchtet werden.

6. Verfahren nach einem der Ansprüche 1 bis 5, **dadurch gekennzeichnet, dass** es ferner eine weitere Operation umfasst, die darin besteht, ein resultierendes optisches Bild (70) liefern, das die Verbindungsfehler (50) codiert anzeigt.

7. Verfahren nach Anspruch 6, **dadurch gekennzeichnet, dass** die codierte Anzeige der Verbindungsfehler (50) in einer Darstellung des Wabenmusters (1) in Draufsicht besteht, auf welcher eine erste Farbe (74) den Zellen (5) zugewiesen ist, die nicht von einem Verbindungsfehler (50) betroffen sind, und eine andere Farbe (72) den Zellen (5) zugewiesen ist, die von einem Verbindungsfehler (50) betroffen sind.

8. Instrument (160) zur Kontrolle der Verbindung des zellenförmigen Kerns eines Wabenmusters mit einer Haut, wobei das Instrument speziell dafür vorgesehen ist, das Kontrollverfahren nach einem der Ansprüche 1 bis 7 durchzuführen, wobei das Instrument (160) folgendes aufweist:
a) eine erste Maske (26), die seitlich durch einen Beleuchtungsrand (27) und einen Beobachtungsrand (28) gegenüber dem Beleuchtungsrand (27) abgegrenzt ist,
b) eine Lichtquelle (15), die hinter der ersten Maske (26) angeordnet ist, wobei die Lichtquelle (15) mit der ersten Maske (26) fest verbunden ist, wobei die Lichtquelle (15) ein Bündel von einfallendem Licht (16) erzeugt, das von der Rückseite der ersten Maske (26) zur Vorderseite der ersten Maske (26) läuft,
c) erste Mittel (20), um automatisch ein mögliches austretendes Licht (16) zu erfassen, das von der Rückseite zur Vorderseite der ersten Maske (26) läuft, wobei die ersten Erfassungsmittel (20) mit der ersten Maske (26) fest verbunden sind, wobei das austretende Licht (21) vor dem Beobachtungsrand (28) vorbeiläuft,
**dadurch gekennzeichnet, dass** es ferner aufweist:
d) eine zweite Maske (36), die mit der ersten Maske (28) fest verbunden und vor dieser in einem gegebenen Abstand (M) angeordnet ist,
e) zweite Mittel, um automatisch die Öffnungen (6) der Zellen (5) vor der zweiten Maske (36) zu erfassen, wobei die zweiten Erfassungsmittel (40) mit der zweiten Maske (36) fest verbunden sind,
f) Haltemittel, um die erste Maske (26) und die zweite Maske (36) in einer Höhe (H) über der freien Fläche (4) zu halten.

9. Kontrollinstrument (160) nach Anspruch 8, **dadurch gekennzeichnet, dass** der Abstand (M) zwischen der ersten Maske (26) und der zweiten Maske (36) derart gewählt ist, dass das austretende Licht (21) zwischen der ersten Maske (26) und der zweiten Maske (36) vorbeiläuft.

10. Kontrollinstrument (160) nach Anspruch 8 oder 9, **dadurch gekennzeichnet, dass** die zweiten Erfassungsmittel (40) mit den ersten Erfassungsmitteln (20) zusammenfallen.

11. Kontrollinstrument (160) nach einem der Ansprüche 8 bis 10, **dadurch gekennzeichnet, dass** es ferner eine zusätzliche Lichtquelle aufweist, die dazu bestimmt ist, die Zellen (5) in Hinsicht auf die automatische Erfassung ihrer Öffnungen (6) durch die zweiten Erfassungsmittel (40) zu beleuchten, wobei die zusätzliche Lichtquelle an der Vorderseite der zweiten Maske (36) angeordnet und mit dieser fest verbunden ist.

12. Kontrollinstrument (160) nach einem der Ansprüche 8 bis 11, **dadurch gekennzeichnet, dass** es ferner Signalverarbeitungsmittel (46) und Bildverarbeitungsmittel (48) aufweist, die den ersten und den zweiten Erfassungsmitteln (20, 40) zugeordnet sind.

13. Kontrollinstrument (160) nach Anspruch 12, **dadurch gekennzeichnet, dass** die Signalverarbeitungsmittel (46) dazu geeignet sind:
- ein Signal, das dem erfassten austretenden Licht (21) entspricht, in ein erstes optisches Bild (60a) umzusetzen, das sich in Form einer Pixelmatrix darstellt, auf welcher Flecken (100), die für mögliche Verbindungsfehler (50) stehen, und Flecken (100) erscheinen, die für parasitäre Reflexe (18) stehen,
- ein Signal, das den erfassten Öffnungen (6) entspricht, in ein zweites optisches Bild (60b) umzusetzen, das sich in Form einer Pixelmatrix darstellt, auf welcher Umrisse (77) erscheinen, die den Öffnungen (6) der Zellen (5) entsprechen.

14. Kontrollinstrument (160) nach Anspruch 12 oder 13, **dadurch gekennzeichnet, dass** die Bildverarbeitungsmittel (48) dazu geeignet sind:
- ein erstes optisches Bild (60a), das sich in Form einer Pixelmatrix präsentiert, auf welcher Flecken (100) erscheinen, und ein zweites optisches Bild (60b) zu überlagern, das sich in Form einer Pixelmatrix präsentiert, auf welcher Umrisse (77) erscheinen,
- auf dem ersten optischen Bild (60a) die Flecken (100), die wenigstens teilweise mit Umrissen (77) überlagert sind, als Flecken (100) zu identifizieren, die repräsentativ für parasitäre Reflexe (18) sind,
- ein drittes optisches Bild (60c) zu liefern, das aus dem ersten optischen Bild (60a) stammt und auf dem die Flecken (100) unterdrückt sind, die als repräsentativ für parasitäre Reflexe (18) identifiziert wurden.

15. Kontrollinstrument (160) nach einem der Ansprüche 12 bis 14, **dadurch** gelcennzeichnet, dass die Bildverarbeitungsmittel (48) auch dazu geeignet sind, ein resultierendes optisches Bild (70) liefern, das die Verbindungsfehler (50) codiert anzeigt.

16. Kontrollinstrument (160) nach Anspruch 15, **dadurch gekennzeichnet, dass** die codierte Anzeige der Verbindungsfehler (50) in einer Darstellung des Wabenmusters (1) in Draufsicht besteht, auf welcher eine erste Farbe (74) den Zellen (5) zugewiesen ist, die nicht von einem Verbindungsfehler (50) betroffen sind, und eine andere Farbe (72) den Zellen (5) zugewiesen ist, die von einem Verbindungsfehler (50) betroffen sind.

17. Kontrollinstrument (160) nach einem der Ansprüche 8 bis 16, **dadurch gekennzeichnet, dass** es derart ist, dass in N aufeinanderfolgenden geometrischen Punkten A an dem Beleuchtungsrand (27) und in N aufeinanderfolgenden geometrischen Punkten B an dem Beobachtungsrand (28), wobei N wenigstens gleich fünf ist, der Abstand AB zwischen dem Beleuchtungsrand (27) und dem Beobachtungsrand (28) minimal und gleich E ist, wobei der Abstand D 1 zwischen zwei geometrischen Punkten A wenigstens gleich 0,5 x E ist, wobei der Abstand D2, zwischen zwei geometrischen Punkten B ebenfalls wenigstens gleich 0,5 x E ist, wobei die N geometrischen Punkte A eine offene Linie (27a) bilden, deren an ihren Enden gebildeten zwei geometrischen Punkte A in einem Abstand voneinander liegen, der größer als derjenige eines beliebigen anderen Dubletts von geometrischen Punkten A ist, wobei die N geometrischen Punkte B ebenfalls eine offene Linie (28a) bilden, deren an ihren Enden gebildeten zwei geometrischen Punkte B in einem Abstand voneinander liegen, der größer als derjenige eines beliebigen anderen Dubletts von geometrischen Punkten B ist.
